# EUROPEAN PATENT SPECIFICATION

(11) **EP 2 676 534 B1**
(45) Date of publication and mention of the grant of the patent: **08.04.2015**
(21) Application number: 12172346.4
(22) Date of filing: 18.06.2012
(51) Int. Cl.: A01D 34/66, A01B 59/06, A01D 67/00

(54) **Fastening means**
Befestigungsmittel
Supports de fixation

(43) Date of publication of application: 25.12.2013
(73) Proprietor: GGP Sweden AB, 573 28 Tranås (SE)
(72) Inventor: Klasson, Jan, 573 40 Tranås (SE)
(74) Representative: Mittler, Andrea

(56) References cited:
- WO-A1-2007/136313
- US-A- 5 528 886
- US-A1- 2002 059 788
- US-A1- 2008 245 044
- US-B1- 6 470 660

## Description

### Technical field

The present disclosure relates to a fastening means, for detachably mounting an implement in front of an implement carrier in the driving direction thereof.

### Background

Such fastening means are described in WO-2007/136313-A1, where a first part is attached to an implement, and a second part is attached to an implement carrier. Typically, the implement carrier and the implement have one such pair of fastening means at each side of the implement carrier front. The first part may include a hook portion that may be connected to the second part at a point of attachment. The second part is then locked in such a way that the implement is simultaneously moved forward, thereby removing any slack on a driving belt which connects the implement carrier and the implement in order to drive a feature in the implement.

That disclosed pair of fastening means simplifies the use of the implement carrier as there is no need to remove the slack of a driving belt as a separate measure. Instead, the driving belt is automatically stretched when the implement is attached and locked to the implement carrier.

One problem associated with fastening means of the above mentioned kind is to further simplify their use.

### Summary

An object of the present invention is to achieve fastening means, for detachably mounting an implement in front of an implement carrier, that is easier to use.

This object is achieved by fastening means, being inter-related parts, as defined in claims 1 and 3, respectively.

More specifically, in claim 1 an implement fastening means is provided, for detachably fastening an implement in front of an implement carrier in the driving direction thereof, the fastening means being devised to be attached to or integral with the implement and comprising a flat bar, one end of which is intended, in use, to be attached to the implement carrier by means of a hook portion in the form of a hook indentation in the lower edge of the bar. A locking indentation is provided, in the upper edge of the bar, the locking indentation being located further away from the end of the bar than the hook indentation and comprising a cam surface adjoining the upper edge of the bar at the side of the locking indentation being closest to said end of the bar, a shoulder portion, following the cam surface, where the distance between the centre of the hook indentation and the cam surface peaks, and a sub-indentation, following the shoulder portion, the sub-indentation having an upper edge being directed towards the hook indentation.

The distance between the centre of the hook indentation and the cam surface may increase gradually towards the shoulder portion.

In claim 3 an implement carrier fastening means is provided, for detachably mounting an implement in front of an implement carrier in the driving direction thereof, the fastening means being devised to be attached to the implement carrier, pivotably around a pivot axis that is transverse to the travelling direction of the implement carrier, and comprising point of attachment, which in a first, open position of the fastening means is located behind the pivot axis as seen in said travelling direction and is exposed, as seen from above, to receive a hook portion of an implement, the fastening means comprising an actuator part that can be used to turn the fastening means around the pivot axis to a second, locked position, in which the point of attachment is located in front of the pivot axis as seen in said travelling direction. The actuator part has a U-shaped cross section with two side parts and an interconnecting bottom part, the bottom part being directed downwards in the said open position and upwards in said closed position, the point of attachement being a cylindrical piece interconnecting said side parts while leaving a space to the bottom part, the actuator part further comprising a locking pin, extending between said side parts and being located in front of the pivot axis in said locked position, the locking pin being slideable in the side parts of the profile in a direction that extends upwards and away from the point of attachement when the fastening means is in the locked position.

The point of attachment may comprise a tube, which is welded to said actuator part side parts.

With such connecting means, the connecting of an implement carrier can be carried out considerably more easily. The hook portion is simply attached over the point of connection, and the actuator part is turned to the locked position where the locking pin falls into the sub-indentation to lock the fastening means in this position.

### Brief description of the drawings

Fig. 1 shows a side view of an implement carrier with a connected implement.
Fig 2 shows, in perspective and in an exploded view, fastening means for attaching an an implement to an implement carrier.
Fig 3 shows a fastening means arrangement in a perspective veiw where the implement fastening means is about to be connected to the carrier fastening means.
Fig 4 illustrates indentations in the upper edge of the implement fastening means which are used to lock the fastening means arrangement.
Fig 5 - fig 9 show successive side views of the fastening means arrangement when attaching the implement fastening means to the implement carrier fastening means.
Fig 10 shows a perspective view of the fasting means arrangement when connected.

### Detailed description

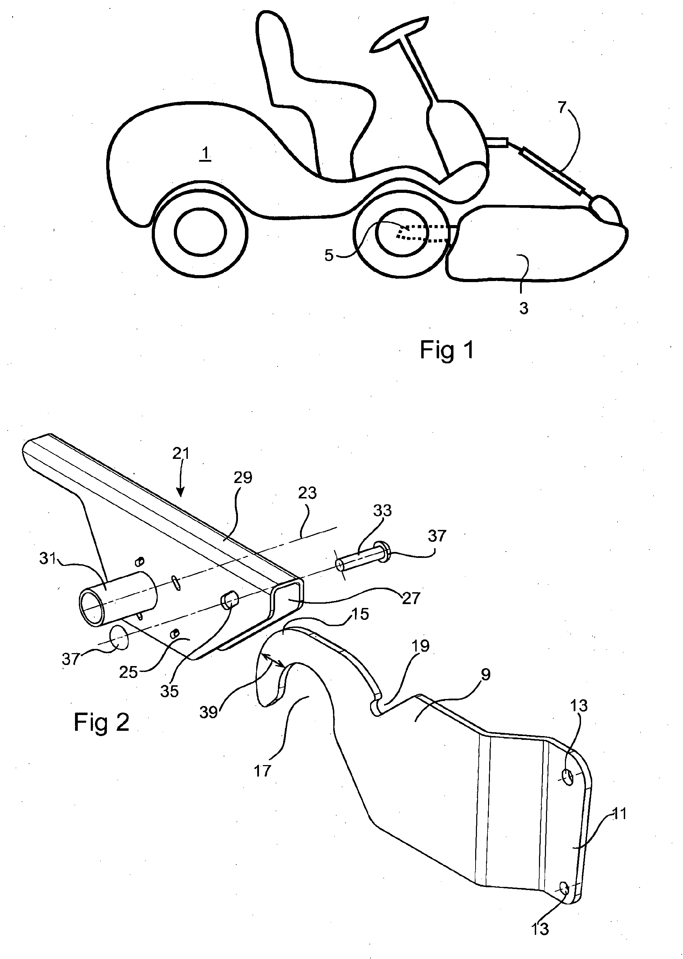

Fig. 1 illustrates, very schematically, a side view of an implement carrier 1 with a connected implement 3 in the form of a lawn cutting assembly. The implement carrier has the form of a vehicle and is usually a ride-on lawn mower, in which the cutting assembly, being one implement, can be replaced by other implements, such as a snow blower during winter. The implement 3 is mounted at the front, which allows the driver of the vehicle to supervise the implement and prevents, for instance, the blades of grass from being pressed down by the wheels of the implement carrier before cutting can take place. The vehicle is suitably steered by the rear wheels or articulated as is well known to the skilled person. The implement 3 is fastened by a fastening means arrangement 5 to the front portion of the implement carrier 1, preferably so that it can be raised by being pivoted about a horizontal pivot which extends through the fastening means 5, perpendicular to the driving direction of the implement carrier. As will be discussed below, fastening means can be attached to the front wheel axle, close to the wheel hub on each side. Resilient means 7 can be arranged between the implement 3 and the implement carrier 1, so as to facilitate upward pivoting. A driving belt (not shown) can be arranged between the implement 3 and the implement carrier 1.

Fig 2 shows, in perspective and in an exploded view, a fastening means arrangement for attaching an implement to an implement carrier. The fastening means arrangement includes an implement fastening means 9, which may be formed from a flat steel bar. One end 11 of the bar may be devised to be attached to the implement, e.g. as illustrated by providing screw holes 13. As an alternative, the implement fastening means 9 may be integral with another part of the implement. The other end 15 forms a hook portion by the provision of a hook indentation 17 in the lower edge of the bar. Lower edge here refers to the bottom edge when the implement is used. The upper edge of the bar comprises a locking indentation 19, which will be described in greater detail later.

The fastening means arrangement further comprises an implement carrier fastening means 21 to which the implement fastening means 9 is intended to be connected. The implement carrier fastening means 21 is attached to the implement carrier, pivotably around a pivot axis 23, which may coincide with the axis of the implement carrier front wheel.

The implement carrier fastening means 21 may comprise an actuator part 25, 27, 29 having a U-shaped cross section with two side parts 25, 27 and an interconnecting part 29. The actuator part may be made from sheet metal. The interconnecting part 29 is directed downwards in a first, open position of the implement carrier fastening means and upwards in a second, closed position which is the one shown in fig 2.

A connector tube 31 or similar is attached to the actuator part, as illustrating extending from one side part 25, and is aligned with the pivot axis 23. The connector tube may be pivotably attached to e.g. the wheel axle of an implement carrier front wheel. A similar connector tube may extend in the other direction from the other side part 27 and aligned with the pivot axis 23 (hidden in this perspective) to allow the implement carrier fastening means to be used e.g. at either front wheel. As illustrated in fig 1, the connector tube may be threaded over the wheel axle before attaching the wheel, but it would also be possible to attach the connector tube to the outside of the wheel hub.

A mechanism such as a locking pin 33 may be arranged, extending between the side parts 25, 27, and passing through openings 35, in each side part, which are elongated to allow the locking pin 33 to slide in a direction parallel with the side part planes. The locking pin 33 has a support or head 37, at each end, which are bigger than the width of the elongated openings to keep the locking pin attached to the actuator part.

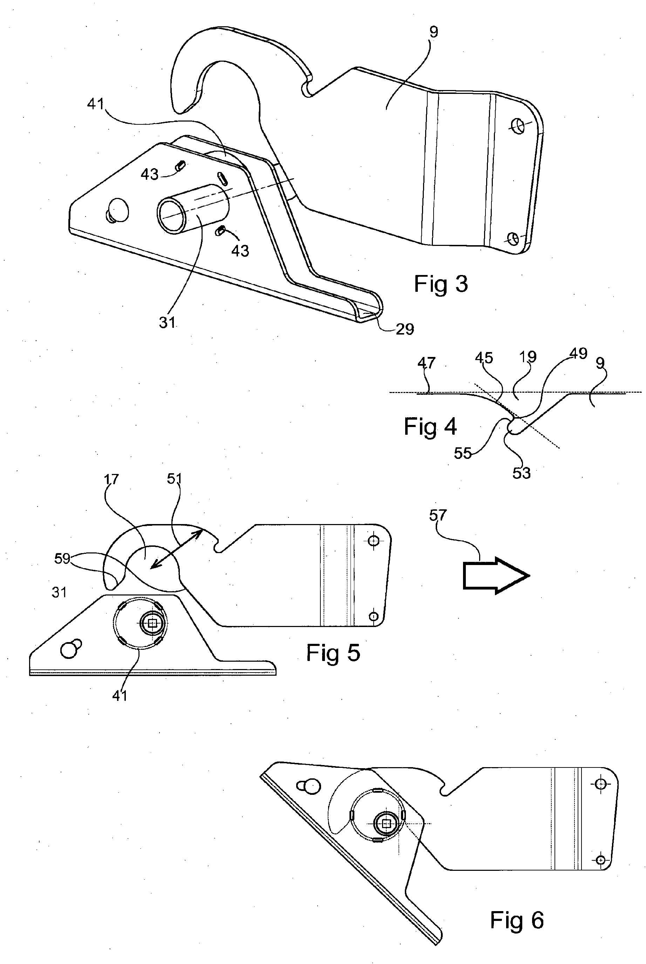

Fig 3 shows a fastening means arrangement in a perspective veiw where the implement fastening means is about to be connected to the carrier fastening means. The actuator part has been pivoted to the open position, such that its interconnecting part 29 is directed downwards. In this position a point of attachement 41 is exposed from above. The point of attachment may be a cylindrical piece interconnecting the side parts 25, 27 of the actuator part while leaving a space to the interconnecting part 29. In the illustrated case the point of attachement is a piece of a metal tube which is welded to the actuator part at holes 43 in the side parts thereof.

Fig 4 illustrates features of a locking indentation in the upper edge of the implement fastening means which is used to lock the fastening means arrangement as will be explained later. The locking indentation is located between the hook indentation and the end 11 where the bar is attached to the implement (cf. fig 2). The indentation includes a cam surface 45, which adjoins the upper edge 47 of the bar at the side of the locking indentation that is closest to the hook portion. Moving further away from the hook portion, the cam surface has a shoulder portion 49, where the distance 51 (cf. fig 5) between the centre of the hook indentation and the cam surface peaks. The locking indentation further has a sub-indentation 53, following the shoulder portion. A sub-indentation here indicates an indentation in an indentation. The sub-indentation may have an upper edge 55 that is directed towards the hook indentation.

Fig 5 - fig 9 show successive side views of the fastening means arrangement when attaching the implement fastening means to the implement carrier fastening means.

Fig 5 shows the same position as fig 3, i.e. the open position. As shown in fig 5, in this position, the point of attachment 41, i.e. the centre thereof, is located behind the pivot axis, i.e. the centre of the connector tube 32, as seen in the travelling direction 57 of the implement carrier. In this position, the hook portion formed by the hook indentation 17 is fitted over the tube forming the point of attachment 41, and typically the hook indentation 17 may include a half-circle with a size slightly larger than said tube. Surfaces adjoining the half-circle 59 may be tapering towards the half-circle to facilitate the fitting of the hook portion on the point of attachment 41.

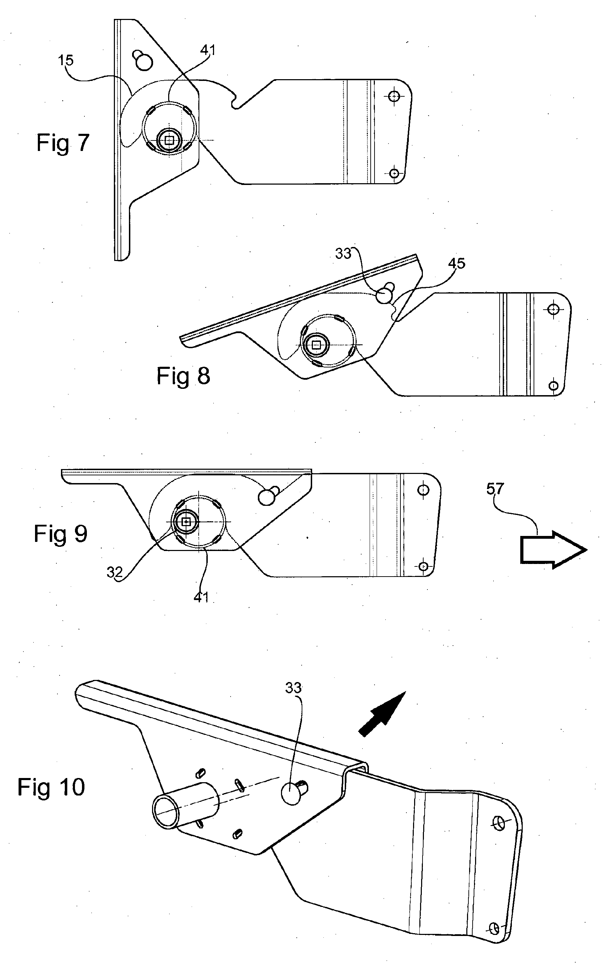

In fig 6 the hook portion is fitted onto the point of attachment, and the rotation of the actuator part, clockwise, has begun. This rotation continues in fig 7. The upper part of the bar making up the implement fastening means 9 may be rounded at the hook portion end 15, and the width (cf. 39, fig 2) at this end may be smaller than the distance between the tube 41 making up the attachment point and the interconnecting part 29 of the actuator part.

When the rotation continues to the position in fig 8, the locking pin 33 of the implement carrier fastening means begins to interact with the cam surface 45 of the implement fastening means. The locking pin thereby slides in the elongated openings of the actuator side parts, until passing the cam surface shoulder portion 49 (cf. fig 4), where the locking pin falls back, and enters the sub-indentation 53. The locking pin may in principle be spring loaded to carry out this movement. However, its own weight is enough to obtain this function.

In this position, the actuator part is locked from rotating counter-clockwise by the sub-indentation's upper edge 55 (cf. fig 4) being more or less parallel with the elongated openings in which the locking pin moves. However, other relative angles are also possible, as long as that upper edge surface is not capable of moving the pin out of the locked position.

In the locked position in fig 9 the point of attachment 41, i.e. the centre thereof, is located in front of the pivot axis, i.e. the centre of the connector tube 32, as seen in the travelling direction 57 of the implement carrier. The corresponding movement forward of the implement relative to the implement carrier, i.e. a few centimetres is sufficient to stretch a driving belt between the implement and the implement carrier. The implement is now firmly connected to the implement carrier.

Fig 10 shows a perspective view of the fasting means arrangement when connected. To unlock the fastening means arrangement in this position, the user must manually slide the locking pin out of the sub-indentation and rotate the actuator part counter-clockwise. When reaching the position indicated in fig 5, the fastening means arrangement may again be disengaged.

The invention is not restricted to the described embodiment and may be altered and varied in different ways within the scope of the appended claims.

## Claims

1. Implement fastening means (9), for detachably fastening an implement in front of an implement carrier in the driving direction thereof, the fastening means being adapted to be attached to or integral with the implement and comprising a flat bar, one end (15) of which is adapted, in use, to be attached to the implement carrier by means of a hook portion in the form of a hook indentation (17) in the lower edge of the bar, **characterised by** a locking indentation (19) in the upper edge of the bar, the locking indentation being located further away from said end of the bar than the hook indentation and comprising:
- a cam surface (45) adjoining the upper edge of the bar at the side of the locking indentation being closest to said end of the bar;
- a shoulder portion (49), following the cam surface, where the distance between the centre of the hook indentation and the cam surface peaks; and
- a sub-indentation (53), following the shoulder portion, the sub-indentation having an upper edge (55) being directed towards the hook indentation (17).

2. Implement fastening means according to claim 1, wherein the distance (51) between the centre of the hook indentation and the cam surface increases gradually towards the shoulder portion.

3. Implement carrier fastening means (21), for detachably mounting an implement in front of an implement carrier in the driving direction thereof, the fastening means being adapted to be attached to the implement carrier, pivotably around a pivot axis (23) that is transverse to the travelling direction of the implement carrier, and comprising point of attachment (41), which in a first, open position of the fastening means is located behind the pivot axis as seen in said travelling direction and is exposed, as seen from above, to receive a hook portion of an implement, the fastening means comprising an actuator part (25, 27, 29) that can be used to turn the fastening means around the pivot axis to a second, locked position, in which the point of attachment is located in front of the pivot axis as seen in said travelling direction, **characterised by** the actuator part having a U-shaped cross section with two side parts (25, 27) and an interconnecting bottom part (29), the bottom part being directed downwards in the said open position and upwards in said closed position, the point of attachement being a cylindrical piece interconnecting said side parts while leaving a space to the bottom part, the actuator part further comprising a locking pin (33), extending between said side parts and being located in front of the pivot axis in said locked position, the locking pin being slideable in the side parts (25, 27) of the profile in a direction that extends upwards and away from the point of attachement when the fastening means is in the locked position.

4. Implement carrier fastening means according to claim 3, wherein the point of attachment comprises a tube, which is welded to said actuator part side parts.

## Patentansprüche

1. Werkzeugbefestigungseinrichtung (9) zum lösbaren Befestigen eines Werkzeugs vor einem Werkzeugträger in dessen Antriebsrichtung, wobei die Befestigungseinrichtung daran angepasst ist, an dem Werkzeug angebracht zu werden oder einstückig mit diesem zu sein, und die eine flache Stange aufweist, von der ein Ende (15) daran angepasst ist, beim Gebrauch an den Werkzeugträger mittels eines Hakenabschnitts in Gestalt einer Hakenausnehmung (17) in der unteren Kante des Stabs angebracht zu werden, gekennzeichnet durch eine Verriegelungsausnehmung (19) in der oberen Kante des Stabs, wobei die Verriegelungsausnehmung von dem Ende des Stabs weiter weg angeordnet ist als die Hakenausnehmung, und die Folgendes aufweist:
- eine Nockenfläche (45) angrenzend an der oberen Kante des Stabs an der Seite der Verriegelungsausnehmung, die dem Ende des Stabs am nächsten liegt;
- einen Absatzabschnitt (49), der der Nockenfläche folgt, wo der Abstand zwischen der Mitte der Hakenausnehmung und der Nockenfläche einen Spitzenwert hat; und
- eine Nebenausnehmung (53), die dem Absatzabschnitt folgt, wobei die Nebenausnehmung eine obere Kante (55) hat, die zu der Hakenausnehmung (17) gerichtet ist.

2. Werkzeugbefestigungseinrichtung gemäß Anspruch 1, wobei sich der Abstand (51) zwischen der Mitte der Hakenausnehmung und der Nockenfläche zu dem Absatzabschnitt allmählich vergrößert.

3. Werkzeugträgerbefestigungseinrichtung (21) zum lösbaren Anbringen eines Werkzeugs vor einem Werkzeugträger in dessen Antriebsrichtung, wobei die Befestigungseinrichtung daran angepasst ist, an den Werkzeugträger um eine Schwenkachse (23) schwenkbar angebracht zu werden, die die Fahrtrichtung des Werkzeugträgers kreuzt, und die einen Anbringungspunkt (41) aufweist, der sich an einer ersten, geöffneten Position der Befestigungseinrichtung bei Betrachtung in der Fahrtrichtung hinter der Schwenkachse befindet und bei Betrachtung von oben freiliegt, um einen Hakenabschnitt eines Werkzeugs aufzunehmen, wobei die Befestigungseinrichtung einen Aktuatorteil (25, 27, 29) aufweist, der zum Drehen der Befestigungseinrichtung um die Schwenkachse zu einer zweiten, verriegelten Position verwendet werden kann, an der sich der Anbringungspunkt bei Betrachtung in der Fahrtrichtung vor der Schwenkachse befindet, gekennzeichnet durch den Aktuatorteil, der einen U-förmigen Querschnitt mit zwei Seitenteilen (25, 27) und einem Verbindungsbodenteil (29) hat, wobei der Bodenteil an der geöffneten Position nach unten und an der geschlossenen Position nach oben gerichtet ist, wobei der Anbringungspunkt ein zylindrisches Teil ist, das die Seitenteile verbindet, während ein Raum zu dem Bodenteil belassen wird, wobei der Aktuatorteil des Weiteren einen Verriegelungsstift (33) aufweist, der sich zwischen den Seitenteilen erstreckt und vor der Schwenkachse an der verriegelten Position angeordnet ist, wobei der Verriegelungsstift in den Seitenteilen (25, 27) des Profils in einer Richtung gleitbar ist, die sich nach oben und von dem Anbringungspunkt weg erstreckt, wenn die Befestigungseinrichtung an der verriegelten Position ist.

4. Werkzeugträgerbefestigungseinrichtung gemäß Anspruch 3, wobei der Anbringungspunkt eine Röhre aufweist, die an den Seitenteilen des Aktuatorteils geschweißt ist.

## Revendications

1. Moyens de fixation d'accessoire (9) pour fixer de manière détachable un accessoire en face d'une remorque dans sa direction d'entraînement, les moyens de fixation étant adaptés pour être fixés à ou être solidaires de l'accessoire et comprenant une barre plate, dont une extrémité (15) est adaptée, à l'usage, pour être fixée à la remorque au moyen d'une partie de crochet se présentant sous la forme d'une encoche de crochet (17) dans le bord inférieur de la barre, **caractérisés par** une encoche de verrouillage (19) dans le bord supérieur de la barre, l'encoche de verrouillage étant positionnée plus à distance de ladite extrémité de la barre que l'encoche de crochet et comprenant .
- une surface de came (45) attenante au bord supérieur de la barre du côté de l'encoche de verrouillage qui est plus près de ladite extrémité de la barre ;
- une partie d'épaulement (49), suivant la surface de came, où la distance entre le centre de l'encoche de crochet et la surface de came est à son maximum ; et
- une sous-encoche (53) suivant la partie d'épaulement, la sous-encoche ayant un bord supérieur (55) qui est dirigé vers l'encoche de crochet (17).

2. Moyens de fixation d'accessoire selon la revendication 1, dans lesquels la distance (51) entre le centre de l'encoche de crochet et la surface de came augmente progressivement vers la partie d'épaulement.

3. Moyens de fixation de remorque (21) pour monter de manière détachable un accessoire en face d'une remorque dans sa direction d'entraînement, les moyens de fixation étant adaptés pour être fixés à la remorque, de manière pivotante autour d'un axe de pivot (23) qui est transversal par rapport à la direction de déplacement de la remorque, et comprenant un point de fixation (41) qui, dans une première position ouverte des moyens de fixation, est positionné derrière l'axe de pivot, comme observé dans ladite direction de déplacement et est exposé, comme observé de dessus, pour recevoir une partie de crochet d'un accessoire, les moyens de fixation comprenant une partie d'actionneur (25, 27, 29) qui peut être utilisée pour faire tourner l'axe de pivot dans une seconde position verrouillée, dans laquelle le point de fixation est positionné en face de l'axe de pivot, comme observé dans ladite direction de déplacement, **caractérisés par** la partie d'actionneur qui a une section transversale en forme de U avec deux parties latérales (25, 27) et une partie de fond d'interconnexion (29), la partie de fond étant dirigée vers le bas dans ladite position ouverte et vers le haut dans ladite position fermée, le point de fixation étant une pièce cylindrique interconnectant lesdites parties latérales tout en laissant un espace vers la partie de fond, la partie d'actionneur comprenant en outre une broche de blocage (33), s'étendant entre lesdites parties latérales et étant positionnée en face de l'axe de pivot dans ladite position verrouillée, la broche de verrouillage pouvant coulisser dans les parties latérales (25, 27) du profil dans une direction qui s'étend vers le haut et à distance du point de fixation lorsque les moyens de fixation sont dans la position verrouillée.

4. Moyens de fixation de support d'accessoire selon la revendication 3, dans lesquels le point de fixation comprend un tube, qui est soudé auxdites parties latérales de la partie d'actionneur.
